# EUROPÄISCHE PATENTANMELDUNG

(11) **EP 0 556 563 A2**
(43) Veröffentlichungstag der Anmeldung: **25.08.1993**
(21) Anmeldenummer: 93100539.1
(22) Anmeldetag: 15.01.1993
(51) Int. Cl.: F01C 1/063, F02B 53/04

(54) **Verbrennungsmotor**

(30) Priorität: 25.01.1992 DE 4201993
(71) Anmelder: Biczuja, Anatolij, PL-00562 Warschau (PL)
(72) Erfinder: Shapovalov, Vladimir, 320005 Dniepropetrovsk (UA)
(74) Vertreter: Tragsdorf, Bodo, Dipl.-Ing.

(57) **Zusammenfassung**

Der Motor besteht aus einem beidseitig verschließbaren zylindrischen Gehäuse (1) mit einer achssymmetrisch gelagerten Welle (2), wobei in dem Gehäuse (1) jeweils drei symmetrisch um 120° versetzt angeordnete Bohrungen (3) für die Zuführung des Treibstoffluftgemisches, drei symmetrisch um 120° versetzt angeordnete Bohrungen (4) für den Einbau der Zündkerzen und drei symmetrisch um 120° versetzt angeordnete Bohrungen (5) für die Abführung der Abgase vorgesehen sind. Auf der Welle (2) innerhalb des Gehäuses (1) sind zwei einen Rotor (6) mit vier in ihrem Volumen veränderbaren, keilförmigen Kammern (9,10,11,12) bildende Rotorteile (7,8) angebracht, die unabhängig voneinander, nacheinander in einer Richtung in Bewegung versetzbar und arretierbar sind.

## Beschreibung

Die Erfindung bezieht sich auf einen Verbrennungsmotor, der nach dem Rotationsprinzip arbeitet und insbesondere in Kraftfahrzeugen eingesetzt werden kann.

Verbrennungsmotoren, die anstelle des Kurbeltriebs nur rotierende Teile besitzen, sind bekannt. Ein solcher Motor ist der Wankelmotor. Bei diesem hat der innere Umfang des Gehäuses die Form einer Trochoide. Der Läufer besitzt die Form eines gleichseitigen Dreiecks mit ausgebauchten Seiten. Zwischen dem Gehäuse und dem Läufer entstehen drei Räume, die sich bei Drehung des Läufers ändern. Der Läufer wird über eine Exzenterwelle und eine entsprechende Innenverzahnung bewegt.
Das Gehäuse ist mit einem Einlaßkanal, einem Auslaßkanal und einer Bohrung zur Befestigung der Zündkerze versehen. Im Gehäusemittelteil sind Kühlwasserräume vorgesehen. Zum Ausgleich der umlaufenden Unwucht von Exzenter und Läufer ist eine mit Gegengewichten ausgerüstete Schwungscheibe angeordnet. Die Abmessungen sind dabei so gewählt, daß sich die Exzenterwelle dreimal so schnell dreht wie der Läufer.
Das Arbeitsverfahren des Wankelmotors entspricht dem eines Viertaktverfahrens. Das Arbeitsspiel wiederholt sich in einem Raum auf 3 Umdrehungen, da jedoch drei Kammern immer gleichzeitig wirksam sind, kommt auf jede Umdrehung ein Arbeitsspiel wie beim Zweitaktverfahren. Der Nachteil des Wankelmotors ist vor allem seine komplizierte Gestaltung, die einen hohen Fertigungsaufwand erfordert. Ein weiteres Problem stellt die Abdichtung des Motors dar. Die geringsten Undichtheiten führen bereits zu einer Verringerung der Motorleistung, zu einer Erhöhung der toxischen Anteile in den Abgasen und zu einem erhöhten Treibstoff- und ölverbrauch.

Die ungünstige Gas-Luft-Gemischverteilung im Wankelmotor führt zu einem erheblichen Mehrverbrauch an Kraftstoff von ca. 20 bis 30 %. Bedingt durch das relativ große Verhältnis von Verbrennungskammeroberfläche zum Kammervolumen ist die Temperatur der Kammerwände so niedrig, daß nicht alle Kohlenwasserstoffe vollständig verbrennen und sich demzufolge der Anteil an toxischen Stoffen in den Abgasen erhöht. Ein weiterer Nachteil des Wankelmotors ist, daß er infolge seines engen Drehzahlbereiches ein aufwendiges Vergasersystem benötigt. Auch die fehlende Elastizität des Motors in seinem Betriebsverhalten laßt sich nur durch den Einbau eines Spezialgetriebes, eines Fünfgangwechselgetriebes, ausgleichen. Dieses wird auch benötigt, um den ungünstigen Drehmomentenverlauf zu kompensieren.

Die Aufgabe der Erfindung besteht darin, einen Verbrennungsmotor, der nach dem Rotationsprinzip arbeitet zu schaffen, der einfach herstellbar ist, eine absolute Dichtheit garantiert, eine weitere Verringerung toxischer Anteile in den Abgasen ermöglicht, in seiner Masse und den Abmessungen im Vergleich zum Wankelmotor wesentlich reduziert werden kann, sich durch ein sehr gutes Leistungsverhalten auszeichnet und nur einen geringen Kraftstoffverbrauch erfordert.

Erfindungsgemäß wird die Aufgabe durch einen Verbrennungsmotor gelöst, der aus einem beidseitig verschließbaren zylindrischen Gehäuse mit einer achssymmetrisch gelagerten, rotierbaren Welle besteht, wobei in das Gehäuse jeweils drei symmetrisch um 120° versetzt angeordnete Bohrungen für die Zuführung des Treibstoffluftgemisches, drei symmetrisch um 120° versetzt angeordnete Bohrungen für den Einbau der Zündkerzen und drei symmetrisch um 120° versetzt angeordnete Bohrungen für die Abführung der Abgase vorgesehen sind. Auf der Welle innerhalb des Gehäuses sind zwei einen Rotor mit vier in ihrem Volumen veränderbaren, keilförmigen Kammern bildende Rotorteile angebracht. Die Rotorteile sind unabhängig voneinander, nacheinander in einer Richtung in Bewegung versetzbar und arretierbar.
Das Drehmoment der Rotorteile ist auf die Welle übertragbar. Entsprechend einer weiteren Ausgestaltung der Erfindung bestehen die beiden Rotorteile jeweils aus einer kreisringförmigen Scheibe mit zwei einseitig an der Scheibe symmetrisch befestigten Lamellen.
Die Rotorteile sind auf die Welle aufschiebbar und dabei sind die Lamellen des einen Rotorteiles in die Zwischenräume des anderen Rotorteiles schiebbar. Die Stirnseiten der Lamellen sind jeweils an der Innenseite der anderen Scheibe gleitbar ausgebildet. Die Rotorteile sind während der Rotation über eine mechanische Kupplung mit der Welle verbindbar. Die Außenkonturen der Scheiben und Lamellen liegen an der Innenoberfläche des Gehäuses an.
Zur Ver- und Entriegelung der beiden Rotorteile sind Arretierungselemente angeordnet, die über einen Steuermechanismus mit den beiden Rotorteilen in Eingriff bringbar sind. Die Arretierungselemente für jedes Rotorteil sind dabei in sechs symmetrisch um 60° versetzt angeordneten Bohrungen geführt, und mittels einer Druckfeder in entsprechende Ausnehmungen in der Scheibe des einen sowie des anderen Rotorteiles einrastbar. Die Bohrungen für die Anordnung der Arretierungselemente können radial im Gehäuse oder konzentrisch zur Welle in beiden Deckeln des Gehäuses eingearbeitet sein.
Im Vergleich zu Verbrennungsmotoren ähnlicher Bauart zeichnet sich der neue Motor durch einen sehr einfachen konstruktiven Aufbau aus. Dadurch ist es möglich, die Fertigungskosten beträchtlich zu senken. Alle wesentlichen Bauteile des Motors haben gut anschleifbare zylindrische Oberflächen und können mit hoher Präzision einfach hergestellt werden. Die Abdichtung des Motors bereitet ebenfalls keine Probleme. Mit herkömmlichen Dichtungselementen kann eine nahezu absolute Dichtheit erreicht werden.
Durch die spezielle keilförmige Ausbildung der Verbrennungskammern ist es möglich, den Anteil an toxischen Abgasen, insbesondere an Kohlenmonoxid, um ca. 30 % zu senken. Ein weiterer Vorteil des Motors sind seine geringen Abmessungen. Im Vergleich zu einem Wankelmotor gleicher Leistung kann der erfindungsgemäße Motor in seinen Abmessungen um 30 % reduziert werden. Gleichzeitig tritt dadurch eine Massereduzierung um ca. 40 % ein.
Bedingt durch das Konstruktionsprinzip dieses Motors, entstehen während der Rotation keine Unwuchten wie beim Wankelmotor, die durch eine mit Gegengewichten versehene Schwungscheibe auszugleichen sind.
Der neue Motor erfordert kein gesondertes Verteilungssystem für das Treibstoffluftgemisch, da durch die Rotorteile ein selbständiges Schließen und öffnen der dafür vorgesehenen Bohrungen erfolgt.
Der Motor kann mit an sich bekannten Zünd- und Vergasersystemen ausgerüstet werden. Auch die Schmierung des Motors kann nach herkömmlicher Art erfolgen. Der Motor zeichnet sich durch ein sehr günstiges Preis-Leistungsverhältnis aus. Im Vergleich zum Wankelmotor sind die Kosten um das 2,5- bis 3-fache und zum Kolbenmotor um das 1,5 bis 2-fache geringer.
Ein besonderer Vorteil dieses Motors ist sein hohes Drehmoment bei niedrigen Drehzahlen. Dadurch ist eine schnelle Beschleunigung von mit diesem Motor ausgerüsteten Kraftfahrzeugen möglich. Die Art der übertragung des Drehmomentes auf die Welle gewährleistet beim Fahren von Kraftfahrzeugen mit diesem Motor bei hohen Geschwindigkeiten einen geringen Kraftstoffverbrauch.

Die Erfindung soll nachstehend an einem Beispiel näher erläutert werden. In der zugehörigen Zeichnung zeigen
- Fig. 1: einen Längsschnitt durch den Motor,
- Fig. 2: einen Querschnitt durch den Motor gemäß der Linie A-A in Figur 1,
- Fig. 3: ein Rotorteil im Längsschnitt,
- Fig. 4: die Draufsicht auf das Rotorteil gemaß Figur 3,
- Fig. 5: einen Querschnitt durch den Motor gemäß der Linie A-A in Figur 1 im Betriebszustand.

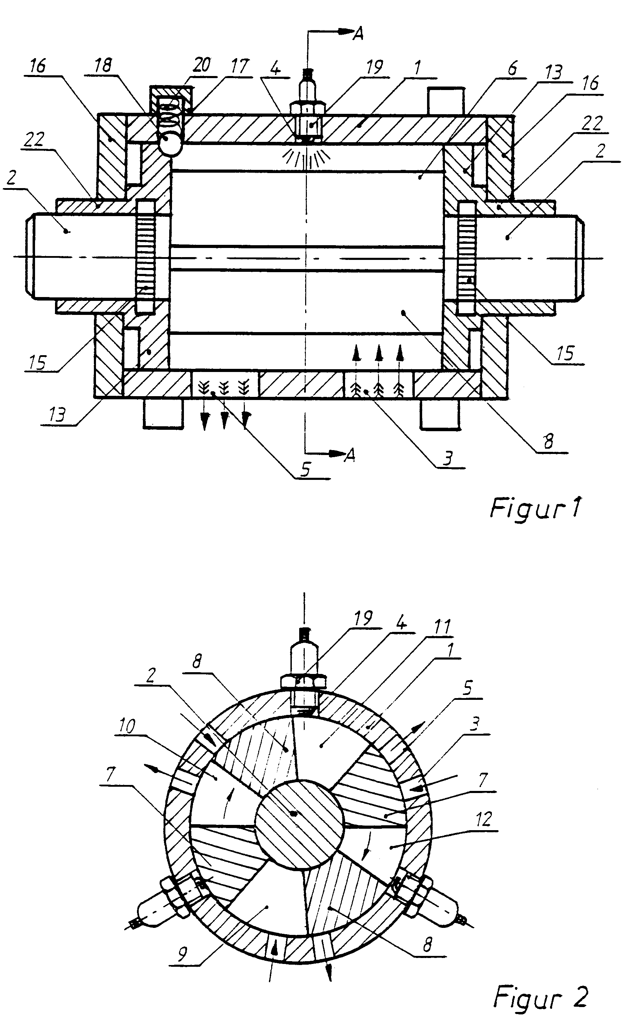

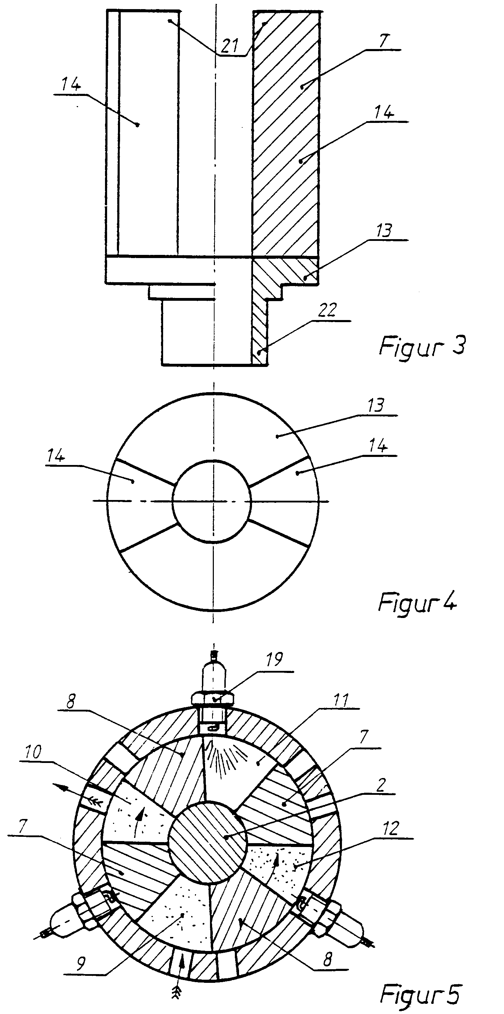

In der Figur 1 ist der erfindungsgemäße Motor im Längsschnitt dargestellt.
Der Motor besteht aus dem Gehäuse 1 mit einer achssymmetrisch gelagerten Welle 2. An seinen beiden Stirnseiten ist der Motor durch aufschiebbare Deckel 16 verschließbar. In dem zylindrischen Gehäuse 1 sind drei symmetrisch um 120° versetzt angeordnete Bohrungen 3 für die Zuführung des Treibstoffluftgemisches, drei symmetrisch um 120° versetzt angeordnete Bohrungen 4 für den Einbau der Zündkerzen 19 und drei symmetrisch um 120° versetzt angeordnete Bohrungen 5 für die Abführung der Abgase vorgesehen. Durch einen Rotor 6 mit den beiden Rotorteilen 7,8 werden in dem Gehäuse 1 vier in ihrem Volumen veränderbare Kammern 9, 10, 11, 12 gebildet (Figur 2). Diese Kammern besitzen die Form eines Keiles. Die Rotorteile 7,8 bestehen jeweils aus einer kreisringförmigen Scheibe 13 mit zwei Lamellen 14, die symmetrisch zueinander angeordnet sind. Die Innenfläche 21 der Lamellen 14 ist dem Radius der Welle 2 angepaßt (Figur 3). An der Scheibe 13 ist noch ein kurzer Flansch 22 angebracht. Die Rotorteile 7, 8 können aus einem Teil gefertigt werden oder aus mehreren Teilen, die dann zusammengebaut werden. Die Rotorteile 7, 8 werden auf die Welle 2 geschoben und dabei so ineinandergesetzt, daß die Lamellen des einen Rotorteiles 7 in den freien Raum zwischen den Lamellen des anderen Rotorteiles 8 passen.
Die Scheiben 13 mit den Lamellen 14 sind in ihrer Große so ausgebildet, daß die Lamellen des einen Rotorteiles mit ihrer Stirnseite jeweils an der Scheibe des anderen Rotorteiles gleiten und sowohl die Scheiben 13 als auch die Lamellen 14 mit ihrer Außenkontur an der Innenoberfläche des Gehäuses 1 gleiten. Durch die spezielle Ausbildung der Lamellen werden somit im Motorgehäuse vier keilförmige Kammern 9, 10, 11, 12 gebildet, die durch den unterschiedlichen Bewegungsablauf der Rotorteile in ihrem Volumen veränderbar sind.
Das durch die Rotorteile 7, 8 erzeugte Drehmoment wird über eine Kupplung 15 auf die Welle 2 übertragen. Da sich die beiden Rotorteile 7, 8 nicht gleichzeitig sondern nur nacheinander in einer Richtung drehen, muß ein Rotorteil während der Rotation des anderen Rotorteiles arretiert werden. Hierzu sind im Gehäuse 1 jeweils an beiden äußeren Randbereichen, sechs symmetrisch um 60° versetzt angeordnete Bohrungen 17 vorgesehen in denen Arretierungselemente 18 beweglich geführt sind. Die Arretierungselemente 18 greifen in die in die Scheiben 13 eingearbeiteten Ausnehmungen ein und bewirken jeweils die Arretierung des einen oder anderen Rotorteiles. Die Arretierungselemente werden über eine nicht dargestellte automatische Steuereinrichtung in Bewegung versetzt.
In der Figur 1 sind als Arretierungselemente 18 Kugeln dargestellt, die mittels einer Feder 20 die Verriegelung des jeweiligen Rotorteiles bewirken. Es ist auch möglich, den gesamten Mechanismus zur Ver- und Entriegelung an den beiden seitlichen Deckeln des Gehäuses anzubringen. Die Bohrungen zur Führung der Arretierungselemente sind dann um 60° versetzt auf einer kreisförmigen Bahn in den beiden Deckeln angeordnet und die Arretierungselemente greifen in entsprechende Ausnehmungen auf der äußeren Seite der Scheiben ein.

Die Wirkungsweise des Motors wird im folgenden unter Bezugnahme auf die Figur 5 näher erläutert.
Während der Drehbewegung des Rotorteiles 7, die durch die zuvor stattgefundene Verbrennung des Kraftstoffluftgemisches in der Kammer 11 und der Expansion der Verbrennungsgase nach dem Anlassen des Motors erzeugt wird, wird das Rotorteil 8 mittels der Arretierungselemente 18 (Fig. 1) festgehalten. Im Arbeitsraum des Motors sind vier in ihrem Volumen veränderbare Kammern 9, 10, 11, 12 vorhanden. Durch die Bewegung des Rotorteiles 7 entsteht in den beiden Kammern 9, 11 ein Unterdruck und in den beiden Kammern 10, 12 ein überdruck. In der Kammer 10 ist die Auslaßöffnung geöffnet und die Abgase können austreten. In der der Kammer 10 gegenüberliegenden Kammer 12 wird das vorher eingespritzte Kraftstoffluftgemisch komprimiert. Durch die weitere Bewegung des Rotorteiles 7 in die durch Pfeile gekennzeichnete Richtung verkleinern sich die Volumina in den Kammern 10, 12 und in den Kammern 9, 11 nimmt das Kammervolumen zu. Dabei wird in der Kammer 9 das Kraftstoffluftgemisch angesaugt, die Einlaßöffnung ist geöffnet.
Das Rotorteil 7 wird durch die Expansion der Verbrennungsgase weiterbewegt und in der Kammer 12 wird das Treibstoffluftgemisch weiter komprimiert, bis das Rotorteil 7 an einem Totpunkt angelangt ist. In diesem Moment erfolgen gleichzeitig drei Funktionen, die Zündung des komprimierten Treibstoffluftgemisches in der Kammer 12, die Arretierung des Rotorteiles 7 und die Entriegelung des Rotorteiles 8. Durch die Expansion der Verbrennungsgase in der Kammer 12 wird die Drehung des Rotorteiles 8 bewirkt, wobei das in der Kammer 9 angesaugte Kraftstoffluftgemisch komprimiert wird und die in der Kammer 11 noch befindlichen Verbrennungsgase ausgestoßen werden.
Gleichzeitig wird dabei in der Kammer 10 durch das geöffnete Einlaßventil Kraftstoffluftgemisch angesaugt. Nach Erreichen der erforderlichen Kompression in der Kammer 9 wird das Kraftstoffluftgemisch gezündet und gleichzeitig das Rotorteil 8 arretiert und das Rotorteil 7 entriegelt. Diese Vorgänge wiederholen sich nun immer wieder und die Rotorteile 7, 8 befinden sich abwechselnd in Drehung. Während der Rotation der Rotorteile 7, 8 wird deren Drehmoment über eine Kupplung z. B. eine Ratschekupplung, auf die Welle 2 übertragen.
Das Arbeitspiel des Motors wiederholt sich bereits nach 1/3 Umdrehung der Antriebswelle.
Der Motor kann in an sich bekannter Weise mit einer Wasserkühlung ausgerüstet werden, wobei um das Motorgehäuse ein entsprechender Kühlmantel angeordnet wird.

Erste Versuche mit dem neuen Motor führten zu hervorragenden Ergebnissen. Mit einem Motor mit einem Hubraum von 212 cm³ wurden folgende Kennwerte erreicht:

| | |
|---|---|
| Leistung | 31 PS, 23 kW |
| Verdichtung | 6,8 |
| Kraftstoffverbrauch | 1,4 l/100 km (theoretischer Wert) |
| Drehmoment | 17 kpm (bei 1000 U/min) |

Ein wesentlicher Vorteil des erfindungsgemäßen Motors liegt in seinem Drehmomentenverlauf. Das Drehmoment steigt bei Verringerung der Drehzahl. Diese Charakteristik entspricht der eines Elektromotors.

Der geringe Kraftstoffverbrauch des Motors wird dadurch erzielt, daß beim Wegnehmen des Gases sich automatisch die Leerlaufdrehzahl einstellt, die konstruktive Auslegung des Motors kein Wechselgetriebe erfordert und der Motor im Leerlauf mit sehr niedrigen Drehzahlen, von ungefähr 100 U/min, läuft.
Der Motor hat eine zylindrische Arbeitskammer und der Rotor sowie die Zylinderwand weisen eine gleichmäßig hohe Temperatur auf, die ein vollständiges Verbrennen der Kohlenwasserstoffe gewährleisten. In Verbindung mit dem geringen Kraftstoffverbrauch ist es somit möglich die Abgase und deren Toxizität zu verringern.

## Patentansprüche

1. Verbrennungsmotor, bestehend aus einem beidseitig verschließbaren zylindrischen Gehäuse mit einer achssymmetrisch gelagerten Welle (2), wobei in dem Gehäuse (1) jeweils drei symmetrisch um 120° versetzt angeordnete Bohrungen (3) für die Zuführung des Treibstoffluftgemisches, drei symmetrisch um 120° versetzt angeordnete Bohrungen (4) für den Einbau der Zündkerzen und drei symmetrisch um 120° versetzt angeordnete Bohrungen (5) für die Abführung der Abgase vorgesehen sind, und auf der Welle (2) innerhalb des Gehäuses (1) zwei einen Rotor (6) mit vier in ihrem Volumen veränderbaren, keilförmigen Kammern (9, 10, 11, 12) bildende Rotorteile (7, 8) angebracht sind, die unabhängig voneinander, nacheinander in einer Richtung in Bewegung versetzbar und arretierbar sind und deren Drehmoment auf die Welle (2) übertragbar ist.

2. Verbrennungsmotor nach Anspruch 1, bei dem die beiden Rotorteile (7, 8) jeweils aus einer kreisringförmigen Scheibe (13) mit zwei einseitig an der Scheibe (13) symmetrisch befestigten Lamellen (14) bestehen, wobei die Rotorteile (7, 8) auf die Welle (2) aufschiebbar und dabei die Lamellen (14) des einen Rotorteiles in die Zwischenräume des anderen Rotorteiles schiebbar sind, die Stirnseiten der Lamellen (14) jeweils an der Innenseite der anderen Scheibe gleitbar ausgebildet sind, die Rotorteile (7, 8) während der Rotation über eine mechanische Kupplung (15) mit der Welle (2) verbindbar sind und die Außenkonturen der Scheiben (13) und Lamellen (14) an der Innenoberfläche des Gehäuses (1) anliegen.

3. Verbrennungsmotor nach den Ansprüchen 1 und 2, bei dem Arretierungselemente (18) angeordnet sind, die über einen Steuermechanismus mit den beiden Rotorteilen (7, 8) in Eingriff bringbar sind.

4. Verbrennungsmotor nach Anspruch 3, bei dem die Arretierungselemente (18) für jedes Rotorteil (7, 8) in sechs symmetrisch um 60° versetzt angeordneten Bohrungen (17) geführt sind und mittels einer Druckfeder (20) in entsprechende Ausnehmungen in der Scheibe (13) des Rotorteiles (7) bzw. (8) einrastbar ausgebildet sind.

5. Verbrennungsmotor nach Anspruch 4, bei dem die Bohrungen (17) radial im Gehäuse (1) angeordnet sind.

6. Verbrennungsmotor nach Anspruch 4, bei dem die Bohrungen (17) konzentrisch zur Welle (2) in den beiden Deckeln (16) eingearbeitet sind.
